# EUROPÄISCHE PATENTANMELDUNG

(11) **EP 1 650 649 A1**
(43) Veröffentlichungstag der Anmeldung: **26.04.2006**
(21) Anmeldenummer: 05021165.5
(22) Anmeldetag: 28.09.2005
(51) Int. Cl.: G06F 9/40

(54) **Übergabe von Variable zwischen Interpreter-basierten und nativen Programmcodeteilen**

(30) Priorität: 25.10.2004 DE 102004051823
(71) Anmelder: Giesecke & Devrient GmbH, 81677 München (DE)
(72) Erfinder: Richter, Raimund, 81377 München (DE)

(57) **Zusammenfassung**

Die Erfindung schafft, bei einer Stapel-basierten Programmiersprache und bei der innerhalb einer auszuführenden Programmsequenz sowohl Interpreter-basierte Programmcodeteile als auch native Programmcodeteile vorgesehen sein können, ein Verfahren zur Übergabe von Variablen zwischen Interpreter-basierten Programmcodeteilen und nativen Programmcodeteilen. Zuerst wird ein erster, wahlweise Interpreter-basierter oder nativer Programmcodeteil ausgeführt. Nachfolgend wird ein zweiter, im Unterschied zum ersten Programmcodeteil nativer bzw. Interpreter-basierter Programmcodeteil ausgeführt. Zumindest eine Variable wird vom ersten an den zweiten Programmcodeteil übergeben. Zur Übergabe der Variablen wird für Interpreterbasierte Programmcodeteile und native Programmcodeteile zumindest ein gemeinsamer Stapel bereitgestellt, auf dem die Variablen zwischen dem Interpreter-basierten Programmcodeteil und nativen Programmcodeteil übergeben werden.

## Beschreibung

Die Erfindung betrifft, bei einer Stapel-basierten Programmiersprache, bei der für die Ausführung von Programmcode in der Programmiersprache zumindest ein Stapel bereitgestellt wird, und bei der innerhalb einer auszuführenden Programmsequenz sowohl Interpreter-basierte Programmcodeteile als auch native Programmcodeteile vorgesehen sein können, ein Verfahren zur Übergabe von Variablen zwischen Interpreter-basierten Programmcodeteilen und nativen Programmcodeteilen.

Ein Beispiel für eine Programmiersprache wie die eingangs bezeichnete ist Java. Grundlegende Konzepte von Java sind beispielsweise in "Java™, die Spezifikation der virtuellen Maschine" von Tim Lindholm & Frank Yellin, 1997 Addison Wesley Longman Verlag, 1. Auflage 1997 (im Folgenden "Lindholm & Yellin" genannt) vorgestellt.

Java ist eine Interpreter-basierte Programmiersprache, bei welcher der Programmcode in einem Datenformat für einen Interpreter bereitgestellt wird. Der Interpreter bildet einen Teil der virtuellen (Java-)Maschine. Interpreter-basierte Programmcodeteile liegen in der Form von Bytecode vor, der durch den Interpreter ausführbar ist.

Ein Java-Programmcode kann neben Interpreter-basierten Programmcodeteilen zusätzlich native Programmcodeteile enthalten. Die nativen Programmcodeteile liegen in Form von nativem Maschinencode des Mikroprozessors vor, auf dem der Java-Programmcode ausgeführt werden soll. Die nativen Programmcodeteile sind entsprechend durch den Mikroprozessor, auf dem der Java-Programmcode ausgeführt werden soll, ausführbar. Die nativen Programmcodeteile können beispielsweise in C programmierter C-Programmcode sein.

Der virtuellen Maschine ist ein Java-Stapel (*Java stack*) zugewiesen, der z.B. zum Abspeichem unterschiedlicher Variablen und Teilergebnisse verwendet wird. Wahlweise unterstützt die virtuelle Maschine mehrere Threads (z.B. für mehrere voneinander unabhängige Programme oder Teilprogramme) zugleich und verfügt dann für jeden Thread über einen eigenen Java-Stapel. Im Zusammenhang mit der Erfindung können die Java-Stapel für unterschiedliche Threads als voneinander unabhängige Stapel im Sinn der Erfindung betrachtet werden.

Java sieht als in sich abgeschlossene Programmcodeteile oder Sequenzen von Programmcodeteilen insbesondere die Methoden vor, durch die Programmcode von Funktionalitäten verwirklicht ist. Methoden lassen sich aufrufen (*invoke*)*,* unterbrechen und wieder fortsetzen, sowie beenden (*terminate*)*.*

Als Interpreter-basierte Methoden sind bei Java die sogenannten Java-Methoden vorgesehen, als native Methoden die sogenannten Java-Native-Methoden. Java-Methoden bestehen aus Bytecode, Java-Native-Methoden hingegen aus nativem Maschinencode.

Für Interpreter-basierten Programmcode - wie z.B. Java-Methoden - einerseits und nativen Programmcode - wie z.B. Java-Native-Methoden - andererseits sind herkömmlicherweise getrennte Stapel vorgesehen. Beispielsweise gibt es bei Java herkömmlicherweise (mindestens) einen Java-Stapel für Java-Bytecode. Zusätzlich stellt der Mikroprozessor, auf dem ein Java-Programmcode ablaufen soll, (mindestens) einen vom Java-Stapel gesonderten Stapel für nativen Programmcode bereit.

Durch Programmcodeteile, insbesondere durch Methoden werden häufig Variablen verarbeitet. Werden mehrere Programmcodeteile nacheinander ausgeführt, ist es oft erforderlich, dass Variablen zwischen den Programmcodeteilen übergeben werden. In dem Fall, wenn ein Interpreter-basierter Programmcodeteil und ein nativer Programmcodeteil nacheinander ausgeführt werden, werden die erforderlichen Variablen herkömmlicherweise dadurch zwischen dem Interpreter-basierten und dem nativen Programmcodeteil übergeben, dass die Variablen vom Java-Stapel auf den nativen Stapel kopiert werden (falls zuerst ein Interpreter-basierter Programmcodeteil und nachfolgend ein nativer Programmcodeteil ausgeführt wird) bzw. vom nativen Stapel auf den Java-Stapel kopiert werden (falls zuerst ein nativer Programmcodeteil und nachfolgend ein Interpreter-basierter Programmcodeteil ausgeführt wird).

In jedem Fall muss, wenn ein Interpreter-basierter und ein nativer Programmcodeteil nacheinander ausgeführt werden, zur Übergabe von Variablen ein Kopiervorgang durchgeführt werden, der Zeit und Speicher und damit Ressourcen - z.B. eines Datenträgers - kostet.

Mit der Erfindung soll ein effizientes Verfahren zur Übergabe von Variablen zwischen Interpreter-basierten Programmcodeteilen und nativen Programmcodeteilen geschaffen werden.

Aus einer Patentanmeldung derselben Anmelderin ist ein effizientes Verfahren zur Übergabe von Variablen zwischen zwei aufeinanderfolgenden Interpreter-basierten Methoden - z.B. Java-Methoden - bekannt. Das dort beschriebene Verfahren ist allerdings auf rein Interpreter-basierten Programmcode (z.B. Java-Methoden) beschränkt. Das dort beschriebene Verfahren wird nachfolgend beispielhaft an Hand der Variablenübergabe zwischen Java-Methoden erläutert.

Bei der genannten Patentanmeldung derselben Anmelderin wird zusätzlich von einer Rahmen-basierten Programmiersprache ausgegangen. Java ist eine solche mit Rahmen (*frames*) arbeitende Programmiersprache. Ein Rahmen oder gleichbedeutend Stapel-Rahmen (*stack frame*) ist eine auf dem Java-Stapel angelegte Ausführungsumgebung für eine Methode. Jede Methode hat ihren eigenen Rahmen.

Bei jedem Aufruf einer Java-Methode (*method invocation*) wird ein Rahmen erzeugt, in dem die Java-Methode ausgeführt wird. Wenn die Java-Methode beendet wird (*method termination*)*,* wird der Rahmen zu der Methode wieder zerstört.

Jeder auf dem Java-Stapel angelegte Rahmen zu einer Java-Methode hält für die Methode insbesondere einen Operandenstapel (*operands stack*), Speicherbereiche für Rahmen-Zustandsinformationen *(stack frame information* oder gleichbedeutend *frame state information*) und Speicherbereiche für lokale Variablen bereit. Die Rahmen-Zustandsinformationen enthalten Verwaltungsdaten zu dem Rahmen, zu dem sie gehören.

Jeder Java-Methode können wahlweise ein oder mehrere Variablen zugeordnet sein. Für eine aufgerufene Java-Methode in einem aktiven Rahmen gibt es als Variablen insbesondere Methodenparameter (*method parameters*)*.*

Werden mehrere Java-Methoden nacheinander ausgeführt, müssen in der Regel Methodenparameter von einer Java-Methode an die nächste übergeben werden. Die Übergabe von Methodenparametern wird zwischen den aufeinanderfolgenden Rahmen der aufeinanderfolgenden Java-Methoden durchgeführt. Technisch gesehen werden dabei die Methodenparameter vom Operandenstapel des zuerst aktiven Rahmens in die lokalen Variablen des Rahmens, der als nächstes aktiv wird, übertragen.

Beim Aufruf einer Java-Methode werden also beispielsweise die benötigten Methodenparameter in die lokalen Variablen des Rahmens, der für die aufgerufene Java-Methode erzeugt wird, eingetragen. Im Fall, dass die aufgerufene Java-Methode (*invoked method*) aus einer aufrufenden Java-Methode (*calling method)* heraus aufgerufen wird, werden die Methodenparameter von der aufrufenden Java-Methode (*calling method*) an die aufgerufene Java-Methode (*invoked method*) übergeben. Dabei sind die zu übergebenden Methodenparameter zuerst auf dem Operandenstapel der aufrufenden Java-Methode (*calling method*) abgelegt. Sobald für die aufgerufene Java-Methode (*invoked method*) ein Rahmen erzeugt ist, werden die Methodenparameter vom "alten" Operandenstapel der aufrufenden Java-Methode (*calling method*) in die lokalen Variablen der aufgerufenen Java-Methode (*invoked method*) übertragen.

Insgesamt ist es also bei der herkömmlichen Übergabe von Methodenparametern zwischen aufeinanderfolgenden Java-Methoden, beispielsweise beim Aufruf einer Methode (*method invocation*)*,* erforderlich, die Methodenparameter zu kopieren. Für das Kopieren sind Zeit und Speicher erforderlich.

Bei dem Verfahren zur Übergabe von Variablen zwischen aufeinanderfolgenden Rahmen, das in der genannten Patentanmeldung derselben Anmelderin beschrieben ist, erfolgt die Übergabe von Variablen zwischen den Rahmen aufeinanderfolgender Interpreter-basierter Methoden dadurch, dass die Rahmen der aufeinander folgenden Methoden so eingerichtet werden, dass die Rahmen überlappen. Konkret wird bei dem Verfahren zuerst ein erster Rahmen einer ersten Interpreter-basierten Methode (z.B. Java-Methode) aktiv betrieben. Nachfolgend wird ein zweiter Rahmen einer zweiten Interpreter-basierten Methode (z.B. Java-Methode) aktiv betrieben. Dabei werden die zu übergebenden Variablen vom ersten Rahmen an den zweiten Rahmen übergeben. Die Übergabe von Variablen vom ersten Rahmen an den zweiten Rahmen erfolgt dabei dadurch, dass der erste Rahmen und der zweite Rahmen so eingerichtet werden, dass die Rahmen überlappen. Die Rahmen überlappen im Speicherbereich. Das Verfahren wird beispielsweise bei der Übergabe von Methodenparametern von einer aufrufenden Java-Methode (*calling method*) an eine aufgerufene Java-Methode (*invoked method*) angewandt, wobei die Methodenparameter vom "alten" Operandenstapel der aufrufenden Java-Methode (*calling method*) in die lokalen Variablen der aufgerufenen Java-Methode (*invoked method*) übertragen werden. Auf Grund des Überlapps der Rahmen ist ein Kopieren der Variablen von einem Rahmen zum anderen nicht erforderlich. Daher bietet das Verfahren für Programmcode, der durchgängig gemäß einem einzigen Programmierkonzept abgefasst ist, z.B. durchgängig Interpreter-basiert gehalten ist, eine sehr effiziente Möglichkeit zur Variablenübergabe zwischen aufeinanderfolgenden Rahmen aufeinanderfolgender Methoden.

Der Erfindung liegt die Aufgabe zu Grunde, ein effizientes Verfahren zur Übergabe von Variablen zwischen Interpreter-basierten Programmcodeteilen und nativen Programmcodeteilen zu schaffen, d.h. ein Verfahren zur Übergabe von Variablen wahlweise von einem Interpreter-basierten Programmcodeteil an einen nativen Programmcodeteil oder - umgekehrt - von einem nativen Programmcodeteil an einen Interpreter-basierten Programmcodeteil.

Die Aufgabe wird durch ein Verfahren nach Anspruch 1 gelöst. Vorteilhafte Ausgestaltungen der Erfindung sind in den abhängigen Ansprüchen angegeben.

Bei dem Verfahren nach Anspruch 1 wird von einer Stapel-basierten Programmiersprache ausgegangen, bei der für die Ausführung von Programmcode in der Programmiersprache zumindest ein Stapel bereitgestellt wird. Weiter können bei der Programmiersprache innerhalb einer auszuführenden Programmsequenz sowohl Interpreter-basierte Programmcodeteile als auch native Programmcodeteile vorgesehen sein. Gemäß der Erfindung wird ein Verfahren zur Übergabe von Variablen zwischen Interpreter-basierten Programmcodeteilen und nativen Programmcodeteilen angegeben. Bei dem Verfahren wird zuerst ein erster, wahlweise Interpreter-basierter oder nativer Programmcodeteil ausgeführt. Nachfolgend wird ein zweiter, im Unterschied zum ersten Programmcodeteil nativer bzw. Interpreter-basierter Programmcodeteil ausgeführt. Dies bedeutet, dass, wenn der erster Programmcodeteil Interpreter-basiert ist, der zweite Programmcodeteil nativ ist und umgekehrt. Weiter wird bei dem Verfahren zumindest eine Variable vom ersten an den zweiten Programmcodeteil übergeben. Gemäß der Erfindung wird zur Übergabe der Variablen für Interpreter-basierte Programmcodeteile und native Programmcodeteile zumindest ein gemeinsamer Stapel bereitgestellt, auf dem die Variablen zwischen dem Interpreter-basierten Programmcodeteil und dem nativen Programmcodeteil übergeben werden.

Das erfindungsgemäße Verfahren zur Übergabe von Variablen hat den Vorteil, dass an der Variablenübergabe nur ein einziger Stapel beteiligt ist, der sowohl für Interpreter-basierten Programmcode als auch für nativen Programmcode eingerichtet und somit verwendbar ist. Hierdurch ist bei dem erfindungsgemäßen Verfahren ein geringerer Verwaltungsaufwand erforderlich als beim herkömmlichen Verfahren zur Variablenübergabe, bei dem für Interpreter-basierten Programmcode und nativen Programmcode zwei gesonderte Stapel betrieben werden müssen.

Daher ist gemäß Anspruch 1 ein effizientes Verfahren zur Übergabe von Variablen zwischen Interpreter-basierten Programmcodeteilen und nativen Programmcodeteilen geschaffen.

Vorzugsweise werden die Variablen dadurch auf dem gemeinsamen Stapel übergeben, dass ein für die Variablen des ersten Programmcodeteils bereitgestellter erster Speicherbereich auf dem Stapel und ein für den zweiten Programmcodeteil bereitgestellter zweiter Speicherbereich auf dem Stapel zumindest teilweise überlappen.

Gemäß einer Ausführungsform der Erfindung ist als erster Programmcodeteil eine aufrufende (*calling*) Methode und als zweiter Programmcodeteil eine aufgerufene (*invoked*) Methode vorgesehen, die durch die aufrufende Methode aufgerufen wird. Bei dieser Ausführungsform ist als Übergabe von Variablen eine Übergabe von Variablen von der aufrufenden (*calling*) Methode an die aufgerufene (*invoked*) Methode vorgesehen. Bei alternativen Ausführungsformen können als Programmcodeteile keine vollständigen Methoden sondern lediglich Teile von Methoden vorgesehen sein, insbesondere Korrektur-Patches, mit denen fehlerhafte Teile von Methoden oder anderen Programmcodesequenzen ausgebessert werden.

Als Programmiersprache ist gemäß einer Ausführungsform der Erfindung eine Rahmen-basierte Programmiersprache vorgesehen. Bei dieser Ausführungsform wird der erste Programmcodeteil in einem ersten auf dem Stapel betriebenen aktiven Rahmen ausgeführt und der zweite Programmcodeteil in einem zweiten auf dem Stapel betriebenen aktiven Rahmen ausgeführt.

Wahlweise erfolgt dabei die Übergabe von Variablen durch Überlapp des ersten Rahmens und des zweiten Rahmens auf dem gemeinsamen Stapel für Interpreter-basierten und nativen Programmcode.

Weiter wahlweise hat der erste Rahmen einen Speicherbereich für einen Operandenstapel, auf dem die Variablen zur Übergabe an den zweiten Rahmen bereitgestellt werden, und der zweite Rahmen einen Speicherbereich für lokale Variablen, der zur Entgegennahme von übergebenen Variablen bereitgestellt ist. Die Übergabe von Variablen durch Überlapp des ersten Rahmens und des zweiten Rahmens erfolgt in diesem Fall dadurch, dass der Speicherbereich des Operandenstapels des ersten Rahmens, auf dem die Variablen zur Übergabe bereitgestellt sind, als zumindest ein Teil des Speicherbereichs für lokale Variablen des zweiten Rahmens deklariert wird.

Gemäß einer Ausführungsform der Erfindung ist als erster Programmcodeteil ein Interpreter-basierter Programmcodeteil vorgesehen und als zweiter Programmcodeteil ein nativer Programmcodeteil vorgesehen. Mit anderen Worten wird die zumindest eine Variable von einem Interpreter-basierten Programmcodeteil an einen nativen Programmcodeteil übergeben. Zur Übergabe der Variablen wird bei dieser Ausführungsform ein global deklarierter nativer Pointer auf den Beginn eines auf dem Stapel vorgesehenen Speicherbereichs gesetzt, der für Variablen des zweiten, nativen Programmcodeteils bereitgestellt ist. Der Pointer wird vorzugsweise durch den Interpreter gesetzt, der für die Interpretation von Interpreter-basiertem Programmcode vorgesehen ist. Dadurch, dass der native Pointer global deklariert ist, kann der Pointer auch aus nativen Programmcodeteilen heraus gelesen werden. Wahlweise wird auch bei dieser Ausführungsform für den Interpreter-basierten Programmcodeteil ein erster Rahmen auf dem gemeinsamen Stapel erzeugt und für den nativen Programmcodeteil auf dem gemeinsamen Stapel ein zweiter Rahmen erzeugt. Wahlweise überlappen der erste und der zweite Rahmen, ähnlich wie weiter oben beschrieben.

Wahlweise weisen die Variablen Methodenparameter auf oder sind Methodenparameter.

Wahlweise ist die Programmiersprache Java.

Gemäß der Erfindung wird auch ein Datenträger mit einem elektronischen Speicher und einem darin implementierten Verfahren gemäß der Erfindung angegeben.

Ein Datenträger im Sinn der Erfindung ist ein Rechnersystem, bei dem die Ressourcen, d.h. Speicherressourcen und/oder Rechenkapazität (Rechenleistung) begrenzt sind, z.B. eine Chipkarte (Smart Card, Mikroprozessor-Chipkarte). Der Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der Datenträger kann weiter eine oder mehrere beliebige Schnittstellen für kontaktlose und/oder kontaktbehaftete Kommunikation mit einem Lesegerät oder Datenverarbeitungssystem (z.B. Personal Computer, Workstation, Server) haben.

Der Datenträger hat einen elektronischen Speicher, der in der Regel aufweist: einen nichtflüchtigen Systemspeicher ROM, einen nichtflüchtigen Anwendungsspeicher EEPROM und einen flüchtigen Arbeitsspeicher RAM. Im ROM sind im Wesentlichen das Betriebssystem und Systemfunktionen abgespeichert. Im EEPROM sind im Wesentlichen Anwendungen (gleichbedeutend: Applikationen) abgespeichert. Wahlweise sind einige der Speicher durch Flash-Speicher bzw. FRAM oder sonstige geeignete Speicher ersetzt.

Im folgenden wird die Erfindung anhand von Ausführungsbeispielen und unter Bezugnahme auf die Zeichnung näher erläutert, in der zeigt:

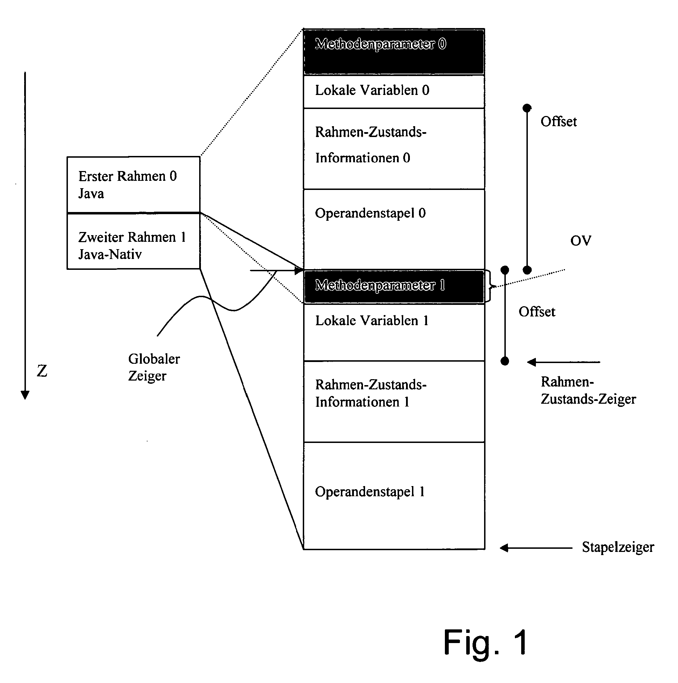

- Fig.1: eine schematische Darstellung eines gemeinsamen Java-Stapels für Interpreter-basierten Programmcode und nativen Programmcode mit zwei Rahmen von zwei aufeinanderfolgenden Methoden, nämlich einer aufrufenden Java-Methode und einer aufgerufenen Java-Native-Methode.

Fig. 1 zeigt eine schematische Darstellung eines Java-Stapels. Der Java-Stapel ist in Speicherbereiche mit unterschiedlichen Speicheradressen eingeteilt. Die Speicheradressen werden in Richtung des Pfeils Z von oben nach unten größer. Auf dem Java-Stapel sind ein erster Rahmen Stack Frame 0 und ein zweiter Rahmen Stack Frame 1 angelegt, wie durch die beiden Beschriftungskästen "Stack Frame 0" und "Stack Frame 1" angedeutet ist. Der erste Rahmen Stack Frame 0 gehört zu einer aufrufenden Java-Methode (*calling method*) und weist einen ersten Speicherbereich für lokale Variablen "Local Variables 0", einen ersten Speicherbereich für Rahmen-Zustandsinformationen "Stack Frame Information 0" und einen ersten Operandenstapel "Operands Stack 0" auf. Der zweite Rahmen Stack Frame 1 gehört zu einer aufgerufenen Java-Native-Methode (*invoked method*)*,* die aus der aufrufenden Java-Methode (*calling method*) heraus aufgerufen wird, und weist einen zweiten Speicherbereich für lokale Variablen "Local Variables 1", einen zweiten Speicherbereich für Rahmen-Zustandsinformationen "Stack Frame Information 1" und einen zweiten Operandenstapel "Operands Stack 1" auf. Der erste Rahmen Stack Frame 0 ist aktiv solange die aufrufende Java-Methode (*calling method*) aktiv ist, d.h. gerade ausgeführt wird. Der zweite Rahmen Stack Frame 1 ist aktiv solange die aufgerufene Java-Native-Methode (*invoked method*) aktiv ist, d.h. gerade ausgeführt wird.

Der grau unterlegte und mit "Method Parameters 1" bezeichnete Speicherbereich auf dem Stapel gibt den Überlapp OV der beiden Rahmen Stack Frame 0 und Stack Frame 1 an. Dieser Überlapp-Speicherbereich OV ist identisch sowohl mit den obersten Einträgen auf dem Operandenstapel "Operands Stack 0" des ersten Rahmens Stack Frame 0 als auch mit dem Speicherbereich (oder zumindest dem Anfangsbereich) der lokalen Variablen "Local Variables 1" des zweiten Rahmens Stack Frame 1.

Zu jedem der beiden Rahmen (zu Java- und Java-Native-Methode) existieren Rahmen-Zustandsinformationen.

Die Struktur der Rahmen-Zustandsinformationen zum Rahmen der aufgerufenen Java-Native-Methode kann beispielsweise gestaltet sein wie durch den folgenden Pseudo-Code angegeben ist. Die Rahmen-Zustandsinformationen zum Rahmen der aufrufenden Java-Methode sind im Wesentlichen analog strukturiert.

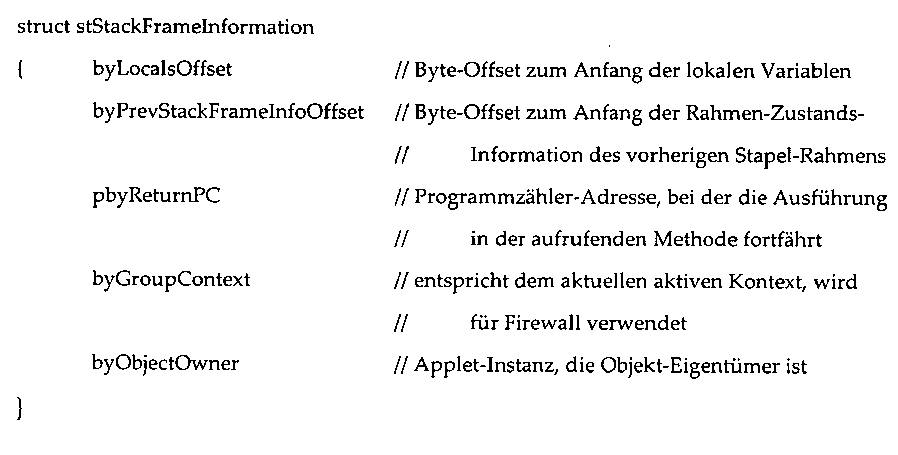

Der Parameter byLocalsOffset gibt den in Einheiten von Bytes gemessenen Offset vom Anfang der Rahmen-Zustandsinformationen des aufgerufenen Rahmens zum Anfang der lokalen Variablen des aufgerufenen Rahmens an. Der Anfang der lokalen Variablen ist zugleich der Anfang des Rahmens insgesamt. Der Parameter byPrevStackFrameInfoOffset gibt den in Einheiten von Bytes gemessenen Offset vom Anfang der lokalen Variablen des aufgerufenen Rahmens zum Anfang der Rahmen-Zustandsinformationen des aufrufenden (d.h. vorangehenden) Rahmens an (vgl. Fig. 1). Der Parameter pbyReturnPC bezeichnet einen Zeiger (Pointer) auf die Adresse des Programmzählers, bei der die Programmausführung in der aufrufenden (*calling*) Methode fortfährt, nachdem die aufgerufene (*invoked*) Methode beendet ist. Der Parameter byGroupContext gibt den aktuell aktiven Kontext der aufgerufenen (*invoked*) Methode an. Der Parameter byObjectOwner gibt die Applet-Instanz an, die Objekt-Eigentümer der aufgerufenen Methode ist.

Das erfindungsgemäße Verfahren ist bei dem Java-Stapel aus Fig. 1 folgendermaßen ausgeführt. Zunächst ist die aufrufende Java-Methode (*calling method*) aktiv. Die Methodenparameter "Method Parameters 0", die von der aufrufenden Java-Methode benötigt werden, sind zunächst in den lokalen Variablen bereit gestellt und werden auf dem Operandenstapel "Operands Stack 0" durch die aufrufende Java-Methode (*calling method*) bearbeitet.

Die aufrufende Java-Methode (*calling method*) führt nun einen Methodenaufruf aus, mit dem sie die aufgerufene Java-Native-Methode (*invoked method*) aufruft.

Durch den Methodenaufruf wird der erste "alte" Rahmen der aufrufenden Methode "Stack Frame 0" inaktiv. Methodenparameter, die an die aufgerufene Methode übergeben werden sollen, werden in den obersten Adressen des Operandenstapels des alten Rahmens "Stack Frame 0" belassen.

Durch den Methodenaufruf wird weiter auf dem gemeinsamen Java-Stapel für Bytecode und nativen Code ein zweiter Rahmen "Stack Frame 1" für die aufgerufene Java-Native-Methode erzeugt und die aufgerufene Methode aktiviert. Die Adresse des zweiten Rahmens "Stack Frame 1" auf dem Java-Stapel wird so gesetzt, dass der Speicherbereich (zumindest der Anfangsbereich) der lokalen Variablen "Local Variables 1" des zweiten Rahmens "Stack Frame 1" der aufgerufenen Methode diejenigen Adressen auf dem Operandenstapel des ersten Rahmens "StackFrame 0" umfasst, in denen die zu übergebenden Methodenparameter abgelegt sind. Hierdurch sind ohne weiteres Zutun die zu übergebenden Methodenparameter im Speicherbereich (bzw. Anfangsbereich) der lokalen Variablen "Local Variables 1" des zweiten Rahmens "Stack Frame 1" für die aufgerufene Methode bereit gestellt.

Das wunschgemäße Setzen der Adresse des zweiten Rahmens "Stack Frame 1" wird erzielt, indem der Anfang der Methodenparameter auf dem Operandenstapel "Operands Stack 0" ermittelt wird und als Anfang der lokalen Variablen "Local Variables 1" der aufgerufenen Methode festgesetzt wird.

In die Rahmen-Zustandsinformationen "Stack Frame Information 1" des zweiten Rahmens "Stack Frame 1" werden die beiden Parameter byLocalsOffset und byPrevStackFrameInfoOffset eingetragen. Der Parameter byLocalsOffset gibt den Offset vom Anfang der Rahmen-Zustandsinformationen "Stack Frame Information 1" des zweiten Rahmens "Stack Frame 1" zum Anfang der lokalen Variablen "Local Variables 1" desselben Rahmens "Stack Frame 1" an. Der Anfang der Methodenparameter auf dem Operandenstapel "Operands Stack 0" des ersten Rahmens "Stack Frame 0" lässt sich aus dem aktuellen Stapelzeiger g_pwSP und der Anzahl der Methodenparameter der aufgerufenen Methode, die in deren Methodenheader angegeben ist, ermitteln. Der nach dem erfolgreichen Aufruf der aufgerufenen Methode (*invoked method*) neue Stapelzeiger g_pwSP lässt sich wiederum aus seinem alten Wert zuzüglich ggf. der Summe der in der aufgerufenen Methode selbst deklarierten lokalen Variablen, deren Anzahl ebenfalls im Methodenheader der aufgerufenen Methode angegeben ist, und der Größe der Datenstruktur für die Rahmen-Zustandsinformationen "Stack Frame Information 1" berechnen. Die Größe des Bereichs der lokalen Variablen "Local Variables 1" der aufgerufenen Methode ergibt sich aus der Anzahl der Methodenparameter, die wie gesagt im Methodenheader angegeben ist.

Der so ermittelte Anfang der Methodenparameter auf dem Operandenstapel "Operands Stack 0" wird als Anfang der lokalen Variablen "Local Variables 1" der aufgerufenen Methode festgesetzt, indem durch die virtuelle Java-Maschine ein globaler Pointer auf diesen Anfang der lokalen Variablen "Local Variables 1" der aufgerufenen Methode gesetzt wird.

Die aufgerufene Java-Native-Methode vermag den globalen Pointer auszuwerten und die Methodenparameter in den lokalen Variablen zu benutzen.

Die erfindungsgemäße Variablenübergabe wurde beispielhaft anhand einer Übergabe von Methodenparametern zwischen einer Java-Methode und einer Java-Native-Methode beschrieben. Die Variablenübergabe funktioniert analog für eine Übergabe zwischen beliebigen anderen Programmcodeteilen als Methoden, z.B. zwischen Teilen von Methoden. Die Variablenübergabe funktioniert ebenfalls für eine Übergabe anderer Variablen als Methodenparameter. Im oben stehenden Beispiel wurde eine Übergabe von Variablen von einem Interpreter-basierten an einen nativen Programmcodeteil beschrieben. Alternativ kann eine Übergabe von Variablen gemäß der Erfindung von einem nativen an einen Interpreter-basierten Programmcodeteil erfolgen.

## Patentansprüche

1. Verfahren, bei einer Stapel-basierten Programmiersprache, bei der für die Ausführung von Programmcode in der Programmiersprache zumindest ein Stapel bereitgestellt wird, und bei der innerhalb einer auszuführenden Programmsequenz sowohl Interpreter-basierte Programmcodeteile als auch native Programmcodeteile vorgesehen sein können, ein Verfahren zur Übergabe von Variablen zwischen Interpreter-basierten Programmcodeteilen und nativen Programmcodeteilen, wobei
- ein erster, wahlweise Interpreter-basierter oder nativer Programmcodeteil ausgeführt wird,
- nachfolgend ein zweiter, im Unterschied zum ersten Programmcodeteil nativer bzw. Interpreter-basierter Programmcodeteil ausgeführt wird,
- wobei zumindest eine Variable vom ersten an den zweiten Programmcodeteil übergeben wird,
wobei zur Übergabe der Variable für Interpreter-basierte Programmcodeteile und native Programmcodeteile zumindest ein gemeinsamer Stapel bereitgestellt wird, auf dem die Variable zwischen dem Interpreter-basierten Programmcodeteil und nativen Programmcodeteil übergeben wird.

2. Verfahren nach Anspruch 1, wobei die mindestens eine Variable **dadurch** auf dem gemeinsamen Stapel übergeben wird, dass ein für Variablen des ersten Programmcodeteils bereitgestellter erster Speicherbereich auf dem Stapel und ein für den zweiten Programmcodeteil für Variablen bereitgestellter zweiter Speicherbereich auf dem Stapel zumindest teilweise überlappen.

3. Verfahren nach Anspruch 1 oder 2, wobei als erster Programmcodeteil eine aufrufende (*calling*) Methode und als zweiter Programmcodeteil eine aufgerufene (*invoked*) Methode vorgesehen ist, die durch die aufrufende (*calling*) Methode aufgerufen wird, und wobei als Übergabe von Variablen eine Übergabe von Variablen von der aufrufenden (*calling*) Methode an die aufgerufene (*invoked*) Methode vorgesehen ist.

4. Verfahren nach einem der Ansprüche 1 bis 3, wobei als Programmiersprache eine Rahmen-basierte Programmiersprache vorgesehen ist und wobei der erste Programmcodeteil in einem ersten auf dem Stapel betriebenen aktiven Rahmen ausgeführt wird und der zweite Programmcodeteil in einem zweiten auf dem Stapel betriebenen aktiven Rahmen ausgeführt wird.

5. Verfahren nach Anspruch 4, wobei die Übergabe von Variablen durch Überlapp des ersten Rahmens und des zweiten Rahmens auf dem gemeinsamen Stapel für Interpreter-basierten und nativen Programmcode erfolgt.

6. Verfahren nach Anspruch 5, wobei
- der erste Rahmen einen Speicherbereich für einen Operandenstapel hat, auf dem die Variablen zur Übergabe an den zweiten Rahmen bereitgestellt werden,
- der zweite Rahmen einen Speicherbereich für lokale Variablen hat, der zur Entgegennahme von übergebenen Variablen bereitgestellt ist, und
- die Übergabe von Variablen durch Überlapp des ersten Rahmens und des zweiten Rahmens **dadurch** erfolgt, dass der Speicherbereich des Operandenstapels des ersten Rahmens, auf dem die Variablen zur Übergabe bereitgestellt sind, als zumindest ein Teil des Speicherbereichs für lokale Variablen des zweiten Rahmens deklariert wird.

7. Verfahren nach einem der Ansprüche 1 bis 6, wobei als erster Programmcodeteil ein Interpreter-basierter Programmcodeteil vorgesehen ist und als zweiter Programmcodeteil ein nativer Programmcodeteil vorgesehen ist, und
wobei zur Übergabe der Variablen ein global deklarierter nativer Pointer auf den Beginn eines auf dem Stapel vorgesehenen Speicherbereichs gesetzt wird, der für Variablen des zweiten, nativen Programmcodeteils bereitgestellt ist.

8. Verfahren nach einem der Ansprüche 1 bis 7, wobei als Variable ein oder mehrere Methodenparameter vorgesehen sind.

9. Verfahren nach einem der Ansprüche 1 bis 8, wobei die Programmiersprache Java ist.

10. Datenträger mit einem elektronischen Datenspeicher und mit einem darin implementierten Verfahren nach einem der Ansprüche 1 bis 9.

11. Computerprogrammprodukt mit einem darin implementierten Verfahren nach einem der Ansprüche 1 bis 9.
